# EUROPEAN PATENT SPECIFICATION

(11) **EP 3 425 194 B1**
(45) Date of publication and mention of the grant of the patent: **06.01.2021**
(21) Application number: 17759318.3
(22) Date of filing: 01.03.2017
(51) Int. Cl.: F03B 17/06, F03B 13/10, F03B 13/08, F03B 13/00

(54) **TURBINE GENERATOR DEVICE FOR PRODUCING ELECTRICAL ENERGY AND ASSOCIATED METHODS OF OPERATION AND INSTALLATION**
TURBINENGENERATOR ZUR ERZEUGUNG VON ELEKTRISCHER ENERGIE UND ZUGEHÖRIGE VERFAHREN ZUM BETRIEB DAVON
DISPOSITIF TURBOGÉNÉRATEUR POUR LA PRODUCTION D'ÉNERGIE ÉLECTRIQUE, PROCÉDÉS DE FONCTIONNEMENT ET D'INSTALLATION ASSOCIÉS

(30) Priority: 03.03.2016 ES 201630252
(43) Date of publication of application: 09.01.2019
(73) Proprietor: Perga Ingenieros, S.L., 30850 Totana Murcia (ES)
(72) Inventor: PEREZ GARCIA, Mario, 30850 Totana (Murcia) (ES); PEREZ GARCIA, José, Miguel, 30850 Totana (Murcia) (ES)
(74) Representative: Herrero & Asociados, S.L.
(86) International application number: PCT/ES2017/070116
(87) International publication number: WO 2017/149186

(56) References cited:
- EP-A2- 2 022 978
- EP-A2- 2 022 978
- EP-A2- 2 420 668
- WO-A1-2006/016012
- WO-A2-2011/053978
- GB-A- 2 257 476
- GB-A- 2 499 114
- GB-A- 2 524 782
- US-A- 5 043 592
- US-A1- 2009 146 430

## Description

### Technical Field of the Invention

As expressed in the title of the present specification, the present invention relates to a turbogenerator device for producing electrical energy, as well as to the associated operation and installation methods, which are comprised within the technical field of electrical energy generation through the utilization of the mechanical energy of a circulating fluid.

The main purpose of the turbogenerator device object of the invention is to provide a set of entities that work together to generate electrical energy through the utilization of a moving fluid which carries mechanical energy, such that said entities assure the most efficient energy transformation possible, which can be installed in any type of new or pre-existing hydraulic installation, taking up a very small space and requiring minimum maintenance, and providing increased control with respect to their startup and shutdown.

### Background of the Invention

By way of introduction, the use and existence of a large number of turbogenerator devices configured for transforming the mechanical energy of a fluid into electrical energy are known, and the electrical energy thereby generated can be utilized in different installations that require electrical energy for operation or it can be directly injected into the existing power grid. In this sense, it must be clarified that the mechanical energy of the fluid originates from the potential energy of the fluid existing between two heights, and the kinetic energy of the moving fluid itself.

In this sense and in general, the use of hydraulic turbines installed in hydroelectric plants is known and there are three types of said hydraulic turbines:
- Pelton-type jet turbines: said turbines have a plurality of concave-shaped vanes, respectively, such that the fluid flow laterally impacts the rotating-axial shaft of the turbine in the form of a lateral jet. The fluid therefore has a very high pressure, and said turbines are designed to work with high heads but low flow rates.
- Kaplan-type reaction turbines: said turbines have a plurality of vanes, respectively, where the fluid circulates parallel to the rotating-axial shaft of the turbine with the particularity of said turbines being able to change the angle of their vanes during operation standing out, and where said turbines are designed to work with low heads and high flow rates.
- Francis-type reaction turbines: said turbines have a plurality of vanes, respectively, where the fluid circulates perpendicular to the rotating-axial shaft of the turbine, and said turbines are designed to work with medium heads and medium flow rates.

All these turbines have a turbine-type element which is in charge of transforming the mechanical energy of the fluid circulating around same into rotational mechanical energy, such that said mechanical energy is transmitted to an asynchronous motor-type generator element formed by a rotor coupled to the shaft of the turbine, and a stator the winding of which transforms said mechanical energy into electrical energy.

However, it must be highlighted that all these turbines are designed for predetermined flow volumes of fluid, which is usually water, such that when there is an excessive volume of fluid, part of said volume of fluid must be bypassed to the outside, such that overvoltage or failures do not occur in the turbogenerator devices. Said fluid bypass means that the mechanical energy of the fluid which leaks out without passing through the mentioned turbogenerator device is not utilized, and where said non-transformed electrical energy is not recovered *a posteriori,* but rather is lost after the fluid flows into the corresponding reservoir, river, or the like.

For that reason, in order to be able to utilize said excess fluid circulating through such bypasses, there is a need for a new turbogenerator device for producing electrical energy which can be installed in said bypasses, taking up a minimum space due to the significantly smaller size of said bypasses in comparison with the main pipes where the previously indicated turbines are located, which can be controlled from the outside in a quick and effective manner. The foregoing is achieved with a device formed by simple entities that work in cooperation with one another to assure the highest possible energy yield and utilization, and it is novel with respect to the state of the art known today.

Patent application EP2022978 A2 relates to an electrical power generator connectable to a water network, and more specifically it provides the realization of a standardized, modular, compact turbine-generator group specially conceived to produce electrical power from an aqueduct water flow.

### Description of the Invention

The present invention relates to a turbogenerator device for producing electrical energy, the turbogenerator device comprising:
- a cylindrical tube open at the ends thereof and configured for allowing the passage of a volume of fluid therethrough;
- a hydraulic turbine axially and mechanically coupled to at least one generator element through a coupling shaft with the respective elements being housed inside said cylindrical tube and defined as a turbogenerator unit, and with said turbogenerator unit being configured for transforming the mechanical energy of the fluid into electrical energy. A very compact turbogenerator unit which can be installed in any type of existing fluid bypass is thereby obtained. In this sense, it must be highlighted that the generator element is of the submergible type as it is housed inside the cylindrical tube that acts as a bypass for a volume of fluid.

The generator element axially coupled to the turbine also comprises a leak-tight tubular casing which is leak-tight with respect to the circulating fluid inside the cylindrical tube, wherein said casing comprises therein:
- a rotor coupled to said coupling shaft, and a stator at least partially surrounding said rotor, wherein said casing has two bases: one of the bases comprising a hole for the passage of the coupling shaft to the turbine, and the other base comprising an elastic diaphragm configured for absorbing pressures from the outside of the tubular casing to the inside thereof; and
- a space defined between the stator and the inner surface of the leak-tight tubular casing, wherein said space contains an antifreeze liquid.

It can therefore be observed that the generator element has two essential technical features for the operation and commissioning of the generator device object of the invention. The first essential technical feature lies in the existence of an elastic diaphragm located at the base opposite the coupling of the coupling shaft, said elastic diaphragm being located in said location because it will thereby allow absorbing and transmitting pressures existing on the outside of the tubular casing to the inside of said generator element.

The second essential technical feature lies in the generator element comprising an antifreeze liquid which can also have cooling and lubricating properties, located in the space defined by the tubular casing and the stator, so the coupling shaft about which the rotor rotates is at least partially covered by said antifreeze fluid, preventing the seizure and deterioration of the moving elements inside said generator element, in addition to preventing unwanted thermal gradients which may damage the entire installation

The turbogenerator device object of the invention therefore has physical entities which allow perfectly installing it as a bypass of a general network where one or more of the mentioned hydraulic turbines known in the state of the art is installed given that both the turbine and the generator element are coupled one after another inside the cylindrical tube, where said coupling is preferably performed axially, taking up a very small space such that the cylindrical tube has a fluid passage section defined by the maximum section of either the turbine or the generator element. In this sense, and preferably with respect to said axial coupling, the option in which the tubular casing is axially coupled to the turbine through a plurality of securing rods parallel to the coupling shaft, and said securing rods being configured for allowing the fluid to circulate therethrough once it has been discharged from the turbine is contemplated so that once said securing rods have been surrounded, the fluid will flow around the tubular casing containing the generator element therein and will be discharged through the outlet of the cylindrical tube.

It must be pointed out that the cylindrical tube itself can act like a pipe during use, i.e., the branches of a hydraulic network are connected/coupled to its inlet and outlet, or it can also act like an independent device housed inside a hydraulic pipe, this latter case being more unfavorable for utilizing all the mechanical energy of the fluid, and it is therefore not the preferred option of use.

In this sense, the preferred method for installing the turbogenerator device object of the invention is described below, where said hydraulic installation comprises at least one main pipe for the passage of fluid, such that said device is installed in parallel with respect to said main pipe, said main pipe comprising two conduits: an inlet conduit from the main pipe to the inlet of the cylindrical tube where the turbogenerator unit is located, and an outlet conduit from said cylindrical tube where the turbogenerator unit is located to the main pipe. Therefore, when there is an excess volume in the main pipe, the fluid can then circulate through a bypass until reaching the cylindrical tube where the turbogenerator unit is housed, transforming the mechanical energy of the fluid into electrical energy for consumption or injection into the existing power grid. As a result of the fluid not having to circulate at all times through the cylindrical tube, and as a result of the elastic diaphragm, the generator element does not suffer or experience excess pressures caused by the initial impact of the fluid as it passes through the inside of the mentioned cylindrical tube, nor does it deteriorate as a result of the antifreeze fluid housed therein.

In turn, it must be pointed out that the turbogenerator device object of the invention can have two opposite functions, i.e.:
A) A first function associated with a method for generating electrical energy through said turbogenerator device where once a volume of fluid is circulating inside the cylindrical tube, the method comprises the following simultaneous steps:
   a) the turbine being operated due to the mechanical energy of the fluid, transforming the mechanical energy of said fluid into rotational mechanical energy;
   b) the coupling shaft rotating between the turbine and the generator element, transmitting the rotational mechanical energy from the turbine to the generator element; and
   c) the rotor rotating with respect to the stator, both the rotor and the stator belonging to said generator element, and transforming the rotational energy into electrical energy. Said method is the preferred method of use.
B) A second function associated with a method for pumping fluid through the turbogenerator device wherein once the inside of the cylindrical tube is filled up with the fluid at least at the point where the turbine is located, the method comprises the following simultaneous steps:
   a) electrical energy being supplied to the generator element, transforming the electrical energy into rotational mechanical energy on the rotor of said generator element;
   b) the coupling shaft rotating between the turbine and the generator element, transmitting the rotational mechanical energy from the generator element to the turbine; and
   c) the turbine being operated due to the rotational mechanical energy of the coupling shaft, transforming said mechanical energy into mechanical energy to the fluid

It can therefore be observed that the turbogenerator device acts like a reversible machine capable of pumping fluid to different locations, see for example for recharging aquifers, where said aquifers can be supplied with fluid as a result of the fluid pumped into them with the described turbogenerator device, bearing in mind the minimum space required for its installation as well as its capacity to absorb excess pressures and withstand very low working temperatures.

As regards the capacity to withstand low temperatures without causing the deterioration of any of the parts thereof, the present invention describes the preferred option whereby at least part of the coupling shaft located inside the tubular casing comprises a plurality of blades configured for recirculating the antifreeze liquid along the inside of said tubular casing. Therefore, the antifreeze liquid is set in motion together with the rotation of the coupling shaft between the turbine and the generator element, absorbing part of the rotational mechanical energy of the shaft, but not being significant for the energy transformation yield of the associated generator element.

As regards the way to assure a coupling which allows the shaft of the turbine to rotate integrally with the shaft of the rotor inside the generator element, the present invention contemplates the possibility of the leak-tight tubular casing comprising:
- a bearing at the base where the hole for the passage of the coupling shaft is located which has a mechanical closure configured for preventing fluid transfer between the antifreeze liquid inside the tubular casing and the circulating fluid outside said casing; and
- a freely-operated bearing at the base where the elastic diaphragm is located which is configured for allowing the free rotation of the coupling shaft with respect to said bearing.

It is therefore an easy-to-implement solution as it does not require any type of wheel arrangements to assure a continuous rotation and without the moving parts coupled to said coupling shaft deteriorating; and where the bearing located at one of the ends of the coupling shaft is a freely-rotating bearing, and the bearing located at the opposite end where the coupling shaft continues to the turbine has a mechanical closure preventing the fluid from the outside from going into the tubular casing housing, among others, the antifreeze fluid.

It must be clarified that even though the existence of a coupling shaft between the turbine and the generator element is described at all times, said description contemplates the option whereby the turbine has a first rotating shaft, the generator element has a second rotating shaft, and they are both mechanically coupled through a direct or indirect coupling. The shaft of the turbine and the shaft of the generator element can therefore be coaxial or parallel or oriented at different angles through a cardan-type coupling or the like.

Likewise, and as regards assuring proper operation of the main entities forming the turbogenerator device object of the invention, the present invention describes how the antifreeze fluid inside the tubular casing must not come into contact with the rotor as such so as not to damage its structure or reduce its energy transformation yield. In this sense, the present invention describes how the tubular casing may in turn comprise a flange provided with a mechanical closure coupled to the stator, wherein said flange is configured for preventing the passage of the antifreeze liquid to the rotor, and thereby assuring that the antifreeze fluid is not transferred into the generator element.

Paying special attention to how the fluid flow circulates through the inside of the cylindrical tube, the present invention describes the preferred option whereby said cylindrical tube comprises:
- at the end where the fluid enters the turbine, a diverging section where said turbine is housed; and
- at the end where the fluid exits after passing through said turbogenerator unit, a converging section. The flows are thereby diverted and the expansion of the fluid is utilized for the subsequent entry thereof into the turbine, as well as the acceleration of the fluid flow at the outlet of the cylindrical tube as a result of the outlet thereof converging in the direction of the bypass of the main pipe.

In relation to how to assure pressure distribution inside the cylindrical tube, the present invention describes the possibility of the device object of the invention comprising a pressure equalizing valve located after the turbogenerator unit; such that it can open or close as the user wishes and/or with an internal programming associated with one or more pressure gauges.

Likewise and in order to regulate the passage of fluid into the cylindrical tube, the present invention contemplates the preferred option whereby the device additionally comprises:
- a shut-off valve located upstream of the turbogenerator unit; and
- a shut-off valve located downstream of the turbogenerator unit.

The specific operative circumstances of a control system associated with the device object of the invention can thereby be described, wherein:
- If the rate Q is lower than the minimum turbine discharge rate of the turbogenerator, the shut-off valves and the equalizing valve will be closed.
- If the rate Q is higher than the minimum turbine discharge rate and lower than the machine design rate, the cut-off valves will be completely open, and the equalizing valve partially open, depending on the magnitude of the circulating flow.
- If the rate Q is equal to the turbine design rate, all the valves will be completely open.
- If the rate Q is higher than the design rate, all the valves will be completely open, and the excess flow would circulate through the equalizing valve.

Finally and associated with the installation of the turbogenerator device, the present invention describes the option whereby said device comprises a solid filter upstream of the turbogenerator unit, the objective of which is to prevent the inclusion of large solids in the turbine, which may damage its structure and prevent proper operation.

Therefore, a turbogenerator device for producing electrical energy is obtained with the proposed invention, said turbogenerator device being perfect for use in hydraulic installations without taking up a lot of space or requiring a significant investment for installation and commissioning, which can be controlled from the outside in a quick and effective manner and assure a high reliability as it is formed by elements which assure that its leak-tightness, its ability to withstand excess pressures and to operate with low temperatures. The foregoing is achieved with a device formed by simple entities that work in cooperation with one another to assure the highest possible energy yield and utilization, and it is novel with respect to the state of the art known today.

### Description of the Drawings

To complement the description that is being made and for the purpose of helping to better understand the features of the invention according to a preferred practical embodiment thereof, a series of drawings is attached as an integral part of said description in which the following has been depicted with an illustrative and non-limiting character:
Figure 1 shows a two-dimensional sectional view of the turbogenerator device for producing electrical energy object of the invention in which the main entities thereof and the coupling between said entities can be seen.
Figure 2 shows a two-dimensional schematic view in which the turbogenerator device for producing electrical energy object of the invention is installed in parallel with respect to a main hydraulic pipe.
Figure 3 shows a three-dimensional view similar to Figure 2 in which the entities arranged outside the cylindrical tube belonging to the turbogenerator device for producing electrical energy object of the invention can be seen.

### Preferred Embodiment of the Invention

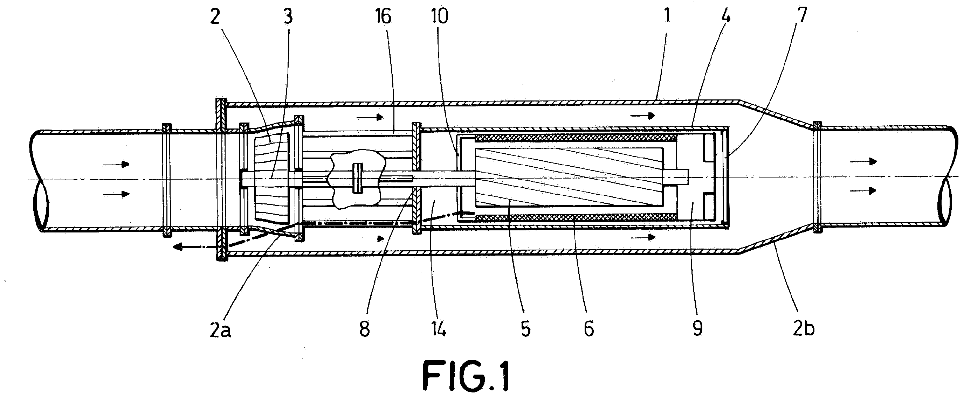

In view of Figure 1, it can be seen how the turbogenerator device for producing electrical energy object of the invention comprises:
- a cylindrical tube (1) open at the ends thereof and configured for allowing the passage of a volume of fluid therethrough;
- a hydraulic turbine (2) axially and mechanically coupled to a generator element through a coupling shaft (3) with the respective elements being housed inside said cylindrical tube (1) and defined as a turbogenerator unit, and with said turbogenerator unit being configured for transforming the mechanical energy of the fluid into electrical energy, such that the turbine (2) and the generator element are axially coupled to one another through the mentioned coupling shaft (3); said shaft is formed by two shafts: one for the turbine (2) and another one for the generator element, and said coupling is a direct coupling through respective flanges that are screwed together; taking up a small space since both the generator element and the turbine (2) are axially aligned with respect to one another and introduced in the cylindrical tube (1).

Additionally, it can be seen in said Figure 1 how the generator element axially coupled to the turbine (2) comprises a leak-tight tubular casing (4) which is leak-tight with respect to the circulating fluid inside the cylindrical tube (1), wherein said casing (4) comprises therein:
- a rotor (5) coupled to said coupling shaft (3), and a stator (6) completely surrounding said rotor (5), wherein said casing (4) has two bases: one of the bases comprising a hole for the passage of the coupling shaft (3) to the turbine (2), and the other base comprising an elastic diaphragm (7) configured for absorbing pressures from the outside of the tubular casing (4) to the inside thereof; and
- a space defined between the stator (6) and the inner surface of the leak-tight tubular casing (4), wherein said space contains an antifreeze liquid (14), such that the stator, and therefore the entire generator element, are protected from low temperatures which may hinder their proper operation.

Likewise, it can be seen inside the cylindrical tube (1) how the leak-tight tubular casing (4) comprises:
- a bearing (8) at the base where the hole for the passage of the coupling shaft (3) is located which has a mechanical closure configured for preventing fluid transfer between the antifreeze liquid (14) inside the tubular casing (4) and the circulating fluid outside said casing (4); and
- a freely-operated bearing (9) at the base where the elastic diaphragm (7) is located which is configured for allowing the free rotation of the coupling shaft (3) with respect to said bearing (9), wherein one of the free ends of the coupling shaft (3) is seen in said freely-operated bearing (9), the other free end being coupled to the turbine (2).

Furthermore, in order to also prevent the transfer of antifreeze fluid to the rotor (5), it can also be seen in Figure 1 how the tubular casing (4) in turn comprises a flange (10) provided with a mechanical closure coupled to the stator (6), assuring leak-tightness between respective parts in an effective and reliable manner. Furthermore, even though it is not illustrated as such, the present invention describes how the portion corresponding to the coupling shaft (3) located inside the tubular casing (4) comprises a plurality of blades configured for recirculating the antifreeze liquid (14) throughout the inside of said tubular casing (4); the antifreeze liquid is therefore in motion to prevent unwanted temperature gradients inside said tubular casing (4).

In relation to how the generator element is coupled to the turbine (2), it can be seen how the tubular casing (4) containing therein the generator element is coupled to the turbine (2) through a plurality of securing rods (16) parallel to the coupling shaft (3); so once the fluid passes through the turbine (2), it can continue to circulate and flow through the mentioned securing rods (16), surround the tubular casing (4), and be discharged from the cylindrical tube (1) through its respective outlet where, as indicated above, the turbine (2) and the tubular casing (4) are centered with respect to the axis of the cylindrical tube (1), and where as a result of the fluid exiting from the turbine (1), and as a result of the tubular casing (4) being arranged thereafter and in alignment, unwanted large recirculation currents of the fluid due to impact with the tubular casing (4) are not produced.

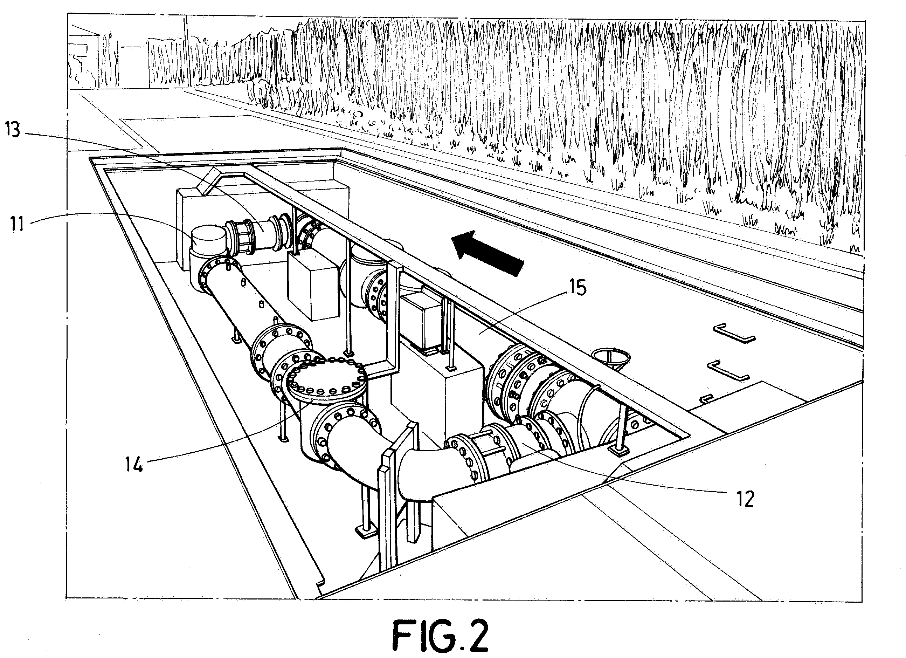

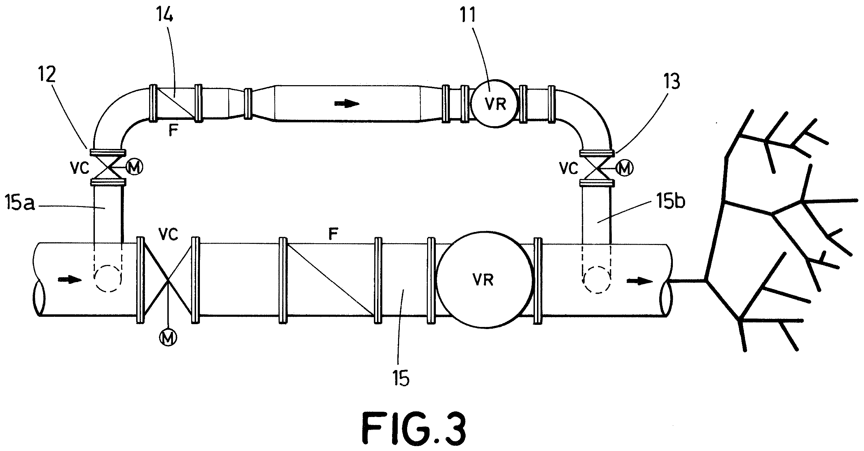

Next, and in view of Figures 2 and 3, it can be seen how the turbogenerator device object of the invention is installed and commissioned as both drawings show a main pipe (15) from which there emerge two bypasses: an inlet conduit (15a) to the cylindrical tube (1) of the turbogenerator device, and an outlet conduit (15b) from said cylindrical tube back to the main pipe (15).

The method for installing the turbogenerator device in a hydraulic installation can thereby be described, wherein said hydraulic installation comprises the mentioned main pipe (15) for the passage of fluid, such that the device is installed in parallel with respect to said main pipe (15), said main pipe (15) comprising two conduits: the inlet conduit (15a) from the main pipe (15) to the inlet of the cylindrical tube (1) where the turbogenerator unit is located, and the outlet conduit (15b) from said cylindrical tube (1) where the turbogenerator unit is located to the main pipe (15).

Furthermore, both drawings show the existence of the following hydraulic elements associated with the bypasses and the device itself:
- A pressure equalizing valve (11) located after the turbogenerator unit, the purpose of which is to regulate both the passage of air and the distribution of pressures inside the cylindrical tube (1);
- a shut-off valve (12) located upstream of the turbogenerator unit;
- a shut-off valve (13) located downstream of the turbogenerator unit, where both of said valves (12, 13) are configured for allowing maintenance and the non-parallel bypass of the fluid circulating through the main pipe (15); and
- a solid filter (14) upstream of the turbogenerator unit.

In view of this description and set of drawings, one skilled in the art will understand that the embodiments of the invention that have been described can be combined in many ways within the object of the invention. The invention has been described according to several preferred embodiments thereof, but for one skilled in the art it will be obvious that many variations can be introduced in said preferred embodiments without exceeding the object of the claimed invention.

## Claims

1. Turbogenerator device for producing electrical energy, the turbogenerator device comprising:
- a cylindrical tube (1) open at the ends thereof and configured for allowing the passage of a volume of fluid therethrough;
- a hydraulic turbine (2) axially and mechanically coupled to at least one generator element through a coupling shaft (3), with the respective elements being housed inside said cylindrical tube (1) and defined as a turbogenerator unit, and with said turbogenerator unit being configured for transforming the mechanical energy of the fluid into electrical energy, wherein the generator element axially coupled to the turbine (2) comprises a leak-tight tubular casing (4) which is leak-tight with respect to the circulating fluid inside the cylindrical tube (1), wherein said casing (4) comprises therein:
- a rotor (5) coupled to said coupling shaft (3) and a stator (6) at least partially surrounding said rotor (5), wherein said casing (4) has two bases: one of the bases comprising a hole for the passage of the coupling shaft (3) to the turbine (2), and the other base comprising an elastic diaphragm (7) configured for absorbing pressures from the outside of the tubular casing (4) to the inside thereof;
the turbogenerator device being **characterized in that** the tubular casing (4) further comprises:
- a space defined between the stator (6) and the inner surface of the leak-tight tubular casing (4), wherein said space contains an antifreeze liquid (14).

2. Turbogenerator device for producing electrical energy according to claim 1, **characterized in that** the leak-tight tubular casing (4) comprises:
- a bearing (8) at the base where the hole for the passage of the coupling shaft (3) is located which has a mechanical closure configured for preventing fluid transfer between the antifreeze liquid (14) inside the tubular casing (4) and the circulating fluid outside said casing (4); and
- a freely-operated bearing (9) at the base where the elastic diaphragm (7) is located which is configured for allowing the free rotation of the coupling shaft (3) with respect to said bearing (9).

3. Turbogenerator device for producing electrical energy according to claim 2, **characterized in that** the tubular casing (4) in turn comprises a flange (10) provided with a mechanical closure coupled to the stator (6), wherein said flange (10) is configured for preventing the passage of the antifreeze liquid (14) to the rotor (5).

4. Turbogenerator device for producing electrical energy according to any of the preceding claims, **characterized in that** the tubular casing (4) is axially coupled to the turbine (2) through a plurality of securing rods (16) parallel to the coupling shaft (3).

5. Turbogenerator device for producing electrical energy according to any of the preceding claims, **characterized in that** at least part of the coupling shaft (3) located inside the tubular casing (4) comprises a plurality of blades configured for recirculating the antifreeze liquid (14) throughout the inside of said tubular casing (4).

6. Turbogenerator device for producing electrical energy according to any of the preceding claims, **characterized in that** the cylindrical tube (1) comprises:
- at the end where the fluid enters the turbine (2), a diverging section (2a) where said turbine (2) is housed; and
- at the end where the fluid exits after passing through said turbogenerator unit, a converging section (2b).

7. Turbogenerator device for producing electrical energy according to any of the preceding claims, **characterized in that** it comprises a pressure equalizing valve (11) located after the turbogenerator unit.

8. Turbogenerator device for producing electrical energy according to any of the preceding claims, **characterized in that** it comprises:
- a shut-off valve (12) located upstream of the turbogenerator unit; and
- a shut-off valve (13) located downstream of the turbogenerator unit.

9. Turbogenerator device for producing electrical energy according to any of the preceding claims, **characterized in that** it comprises a solid filter (14) upstream of the turbogenerator unit.

10. Method for generating electrical energy through the turbogenerator device defined in any of the preceding claims, **characterized in that** once a volume of fluid circulates inside the cylindrical tube (1), the method comprises the following simultaneous steps:
a) the turbine (2) being operated due to the mechanical energy of the fluid, transforming the mechanical energy of said fluid into rotational mechanical energy;
b) the coupling shaft (3) rotating between the turbine (2) and the generator element, transmitting the rotational mechanical energy from the turbine (2) to the generator element; and
c) the rotor (5) rotating with respect to the stator (6), both the rotor and the stator belonging to said generator element, and transforming the rotational energy into electrical energy.

11. Method for pumping fluid through the turbogenerator device defined in any of claims 1 to 9, **characterized in that** once the inside of the cylindrical tube (1) is filled up with the fluid at least at the point where the turbine (2) is located, the method comprises the following simultaneous steps:
a) electrical energy being supplied to the generator element, transforming the electrical energy into rotational mechanical energy on the rotor (5) of said generator element;
b) the coupling shaft (3) rotating between the turbine (2) and the generator element, transmitting the rotational mechanical energy from the generator element to the turbine (2); and
c) the turbine (2) being operated due to the rotational mechanical energy of the coupling shaft (3), transforming said mechanical energy into mechanical energy to the fluid.

12. Method for installing the turbogenerator device defined in any of claims 1 to 9 in a hydraulic installation, wherein said hydraulic installation comprises at least one main pipe (15) for the passage of fluid, **characterized in that** said device is installed in parallel with respect to said main pipe (15), said main pipe (15) comprising two conduits: an inlet conduit (15a) from the main pipe (15) to the inlet of the cylindrical tube (1) where the turbogenerator unit is located, and an outlet conduit (15b) from said cylindrical tube (1) where the turbogenerator unit is located to the main pipe (15).

## Patentansprüche

1. Turbogeneratorvorrichtung zum Erzeugen elektrischer Energie, wobei die Turbogeneratorvorrichtung umfasst:
ein zylindrisches Rohr (1), das an seinen Enden offen ist und konfiguriert ist zum Ermöglichen des Durchgangs eines Fluidvolumens durch dieses;
eine hydraulische Turbine (2), die axial und mechanisch über eine Kopplungswelle (3) mit mindestens einem Generatorelement gekuppelt ist, wobei die jeweiligen Elemente im Inneren des zylindrischen Rohrs (1) untergebracht und als Turbogeneratoreinheit definiert sind und wobei die Turbogeneratoreinheit konfiguriert ist zum Umwandeln der mechanische Energie des Fluids in elektrische Energie, wobei das Generatorelement, das axial mit der Turbine (2) gekoppelt ist, ein leckdichtes rohrförmiges Gehäuse (4) umfasst, das in Bezug auf das im Inneren des zylindrischen Rohrs (1) zirkulierende Fluid leckdicht ist, wobei das Gehäuse (4) im Inneren umfasst:
einen Rotor (5), der mit der Kopplungswelle (3) gekoppelt ist, und einen Stator (6), der den Rotor (5) zumindest teilweise umgibt, wobei das Gehäuse (4) zwei Basen aufweist, wobei eine der Basen ein Loch für den Durchgang der Kopplungswelle (3) zur Turbine (2) aufweist und die andere Basis eine elastische Membran (7) aufweist, die konfiguriert ist zum Absorbieren von Drücken von der Außenseite des rohrförmigen Gehäuses (4) zu dessen Innenseite;
wobei die Turbogeneratorvorrichtung **dadurch gekennzeichnet ist, dass** das rohrförmige Gehäuse (4) ferner umfasst:
einen Raum, der zwischen dem Stator (6) und der Innenfläche des leckdichten rohrförmigen Gehäuses (4) definiert ist, wobei der Raum eine Frostschutzmittelflüssigkeit (14) enthält.

2. Turbogeneratorvorrichtung zum Erzeugen elektrischer Energie nach Anspruch 1, **dadurch gekennzeichnet, dass** das leckdichte rohrförmige Gehäuse (4) umfasst:
ein Lager (8) an der Basis, an der sich das Loch für den Durchgang der Kopplungswelle (3) befindet, das einen mechanischen Verschluss aufweist, der konfiguriert ist zum Verhindern des Fluidtransfers zwischen der Frostschutzflüssigkeit (14) innerhalb des rohrförmigen Gehäuses (4) und dem zirkulierenden Fluid außerhalb des Gehäuses (4); und
ein freibetriebenes Lager (9) an der Basis, an der sich die elastische Membran (7) befindet, das konfiguriert ist zum Ermöglichen der freien Drehung der Kopplungswelle (3) in Bezug auf das Lager (9).

3. Turbogeneratorvorrichtung zum Erzeugen elektrischer Energie nach Anspruch 2, **dadurch gekennzeichnet, dass** das rohrförmige Gehäuse (4) seinerseits einen Flansch (10) aufweist, der mit einem mechanischen Verschluss versehen ist, der mit dem Stator (6) gekoppelt ist, wobei der Flansch (10) konfiguriert ist zum Verhindern des Durchgangs der Frostschutzmittelflüssigkeit (14) zu dem Rotor (5).

4. Turbogeneratorvorrichtung zum Erzeugen elektrischer Energie nach einem der vorstehenden Ansprüchen, **dadurch gekennzeichnet, dass** das rohrförmige Gehäuse (4) durch eine Vielzahl von zur Kopplungswelle (3) paralleler Befestigungsstangen (16) axial an die Turbine (2) gekoppelt ist.

5. Turbogeneratorvorrichtung zum Erzeugen elektrischer Energie nach einem der vorstehenden Ansprüche, **dadurch gekennzeichnet, dass** mindestens ein Teil der Kopplungswelle (3), die sich im Inneren des rohrförmigen Gehäuses (4) befindet, eine Vielzahl von Schaufeln umfasst, die konfiguriert sind zum Umwälzen der Frostschutzmittelflüssigkeit (14) im gesamten Inneren des rohrförmigen Gehäuses (4).

6. Turbogeneratorvorrichtung zum Erzeugen elektrischer Energie nach einem der vorstehenden Ansprüche, **dadurch gekennzeichnet, dass** das zylindrische Rohr (1) umfasst:
an dem Ende, an dem das Fluid in die Turbine (2) eintritt, einen divergierender Abschnitt (2a), in dem die Turbine (2) untergebracht ist, und
an dem Ende, an dem das Fluid nach Durchlaufen der Turbogeneratoreinheit austritt, einen konvergierenden Abschnitt (2b).

7. Turbogeneratorvorrichtung zum Erzeugen elektrischer Energie nach einem der vorstehenden Ansprüche, **dadurch gekennzeichnet, dass** sie ein Druckausgleichsventil (11) umfasst, das hinter der Turbogeneratoreinheit angeordnet ist.

8. Turbogenerator-Vorrichtung zum Erzeugen elektrischer Energie nach einem der vorstehenden Ansprüche, **dadurch gekennzeichnet, dass** sie umfasst:
ein Absperrventil (12), das stromaufwärts der Turbogeneratoreinheit angeordnet ist; und
ein Absperrventil (13), das stromabwärts der Turbogeneratoreinheit angeordnet ist.

9. Turbogeneratorvorrichtung zum Erzeugen elektrischer Energie nach einem der vorstehenden Ansprüche, **dadurch gekennzeichnet, dass** sie ein Feststofffilter (14) stromaufwärts der Turbogeneratoreinheit umfasst.

10. Verfahren zum Erzeugen elektrischer Energie mittels der Turbogeneratorvorrichtung nach einem der vorstehenden Ansprüche, **dadurch gekennzeichnet, dass**, sobald ein Fluidvolumen im Inneren des zylindrischen Rohrs (1) zirkuliert, das Verfahren die folgenden simultanen Schritte umfasst:
a) die Turbine (2) wird aufgrund der mechanischen Energie des Fluids betrieben, wobei die mechanische Energie des Fluids in mechanische Rotationsenergie umwandelt wird;
b) die Kopplungswelle (3) zwischen der Turbine (2) und dem Generatorelement rotiert, wobei die mechanische Rotationsenergie von der Turbine (2) auf das Generatorelement übertragen wird; und
c) der Rotor (5) sich in Bezug auf den Stator (6) dreht, wobei sowohl der Rotor als auch der Stator zu dem Generatorelement gehören, und die Rotationsenergie in elektrische Energie umgewandelt wird.

11. Verfahren zum Pumpen von Fluid durch die in einem der Ansprüche 1 bis 9 definierte Turbogeneratorvorrichtung, **dadurch gekennzeichnet, dass**, sobald das Innere des zylindrischen Rohrs (1) zumindest an der Stelle, an der sich die Turbine (2) befindet, mit dem Fluid gefüllt ist, das Verfahren die folgenden simultanen Schritte umfasst:
a) elektrische Energie wird an das Generatorelement geliefert, wobei die elektrische Energie an dem Rotor (5) des Generatorelements in mechanische Rotationsenergie umgewandelt wird;
b) die Kopplungswelle (3) zwischen der Turbine (2) und dem Generatorelement rotiert und überträgt die mechanische Rotationsenergie von dem Generatorelement auf die Turbine (2); und
c) die Turbine (2) wird aufgrund der mechanischen Rotationsenergie von der Kopplungswelle (3) betrieben, wobei die mechanische Energie in mechanische Energie des Fluids umgewandelt wird.

12. Verfahren zum Installieren der in einem der Ansprüche 1 bis 9 definierten Turbogeneratorvorrichtung in einer hydraulischen Anlage, wobei die hydraulische Anlage mindestens eine Hauptrohrleitung (15) für den Durchgang von Fluid enthält, **dadurch gekennzeichnet, dass** die Vorrichtung parallel zu der Hauptrohrleitung (15) installiert wird, wobei die Hauptrohrleitung (15) zwei Leitungen umfasst: eine Einlassleitung (15a) von der Hauptrohrleitung (15) zum Einlass des zylindrischen Rohrs (1), in dem sich die Turbogeneratoreinheit befindet, und eine Auslassleitung (15b) von dem zylindrischen Rohr (1), in dem sich die Turbogeneratoreinheit befindet, zur Hauptrohrleitung (15).

## Revendications

1. Dispositif turbogénérateur pour produire de l'énergie électrique, le dispositif turbogénérateur comprenant :
- un tube cylindrique (1) ouvert au niveau de ses extrémités et configuré pour permettre le passage d'un volume de fluide à travers celui-ci ;
- une turbine hydraulique (2) couplée axialement et mécaniquement à au moins un élément générateur par l'intermédiaire d'un arbre de couplage (3), avec les éléments respectifs logés à l'intérieur dudit tube cylindrique (1) et définis comme un groupe turbogénérateur, et avec ledit groupe turbogénérateur configuré pour transformer l'énergie mécanique du fluide en énergie électrique, dans lequel l'élément générateur couplé axialement à la turbine (2) comprend un carter tubulaire étanche (4) qui est étanche par rapport au fluide de circulation à l'intérieur du tube cylindrique (1), dans lequel ledit carter (4) comprend à l'intérieur de celui-ci :
- un rotor (5) couplé audit arbre de couplage (3) et un stator (6) entourant au moins partiellement ledit rotor (5), dans lequel ledit carter (4) a deux bases : l'une des bases comprenant un trou pour le passage de l'arbre de couplage (3) à la turbine (2), et l'autre base comprenant un diaphragme élastique (7) configuré pour absorber des pressions depuis l'extérieur du carter tubulaire (4) vers l'intérieur de celui-ci ;
le dispositif turbogénérateur étant **caractérisé en ce que** le carter tubulaire (4) comprend en outre :
- un espace défini entre le stator (6) et la surface interne du carter tubulaire étanche (4), dans lequel ledit espace contient un liquide antigel (14).

2. Dispositif turbogénérateur pour produire de l'énergie électrique selon la revendication 1, **caractérisé en ce que** le carter tubulaire étanche (4) comprend :
- un palier (8) au niveau de la base où se trouve le trou pour le passage de l'arbre de couplage (3) qui a une fermeture mécanique configurée pour empêcher un transfert de fluide entre le liquide antigel (14) à l'intérieur du carter tubulaire (4) et le fluide de circulation à l'extérieur dudit carter (4) ; et
- un palier à actionnement libre (9) au niveau de la base où se trouve le diaphragme élastique (7) qui est configuré pour permettre la rotation libre de l'arbre de couplage (3) par rapport audit palier (9).

3. Dispositif turbogénérateur pour produire de l'énergie électrique selon la revendication 2, **caractérisé en ce que** le carter tubulaire (4) comprend à son tour une bride (10) pourvue d'une fermeture mécanique couplée au stator (6), dans lequel ladite bride (10) est configurée pour empêcher le passage du liquide antigel (14) au rotor (5).

4. Dispositif turbogénérateur pour produire de l'énergie électrique selon l'une des revendications précédentes, **caractérisé en ce que** le carter tubulaire (4) est couplé axialement à la turbine (2) par l'intermédiaire d'une pluralité de tiges de fixation (16) parallèles à l'arbre de couplage (3).

5. Dispositif turbogénérateur pour produire de l'énergie électrique selon l'une des revendications précédentes, **caractérisé en ce qu'**au moins une partie de l'arbre de couplage (3) située à l'intérieur du carter tubulaire (4) comprend une pluralité de pales configurées pour faire recirculer le liquide antigel (14) dans toute la partie intérieure dudit carter tubulaire (4).

6. Dispositif turbogénérateur pour produire de l'énergie électrique selon l'une des revendications précédentes, **caractérisé en ce que** le tube cylindrique (1) comprend :
- au niveau de l'extrémité où le fluide entre dans la turbine (2), une section divergente (2a) où ladite turbine (2) est logée ; et
- au niveau de l'extrémité où le fluide sort après avoir traversé ledit groupe turbogénérateur, une section convergente (2b).

7. Dispositif turbogénérateur pour produire de l'énergie électrique selon l'une des revendications précédentes, **caractérisé en ce qu'**il comprend une soupape d'équilibrage de pression (11) située après le groupe turbogénérateur.

8. Dispositif turbogénérateur pour produire de l'énergie électrique selon l'une des revendications précédentes, **caractérisé en ce qu'**il comprend :
- une soupape d'arrêt (12) située en amont du groupe turbogénérateur ; et
- une soupape d'arrêt (13) située en aval du groupe turbogénérateur.

9. Dispositif turbogénérateur pour produire de l'énergie électrique selon l'une des revendications précédentes, **caractérisé en ce qu'**il comprend un filtre de matières solides (14) en amont du groupe turbogénérateur.

10. Procédé de génération d'énergie électrique par l'intermédiaire du dispositif turbogénérateur défini dans l'une des revendications précédentes, **caractérisé en ce qu'**une fois qu'un volume de fluide circule à l'intérieur du tube cylindrique (1), le procédé comprend les étapes simultanées suivantes :
a) la turbine (2) étant actionnée en raison de l'énergie mécanique du fluide, transformant l'énergie mécanique dudit fluide en énergie mécanique de rotation ;
b) l'arbre de couplage (3) tournant entre la turbine (2) et l'élément générateur, transmettant l'énergie mécanique de rotation de la turbine (2) à l'élément générateur ; et
c) le rotor (5) tournant par rapport au stator (6), le rotor et le stator appartenant tous deux audit élément générateur, et transformant l'énergie de rotation en énergie électrique.

11. Procédé de pompage de fluide par l'intermédiaire du dispositif turbogénérateur défini dans l'une des revendications 1 à 9, **caractérisé en ce qu'**une fois que la partie intérieure du tube cylindrique (1) est remplie du fluide au moins au point où se trouve la turbine (2), le procédé comprend les étapes simultanées suivantes :
a) de l'énergie électrique étant fournie à l'élément générateur, transformant l'énergie électrique en énergie mécanique de rotation sur le rotor (5) dudit élément générateur ;
b) l'arbre de couplage (3) tournant entre la turbine (2) et l'élément générateur, transmettant l'énergie mécanique de rotation de l'élément générateur à la turbine (2) ; et
c) la turbine (2) étant actionnée en raison de l'énergie mécanique de rotation de l'arbre de couplage (3), transformant ladite énergie mécanique en énergie mécanique pour le fluide.

12. Procédé d'installation du dispositif turbogénérateur défini dans l'une des revendications 1 à 9 dans une installation hydraulique, dans lequel ladite installation hydraulique comprend au moins un tuyau principal (15) pour le passage de fluide, **caractérisé en ce que** ledit dispositif est installé en parallèle par rapport audit tuyau principal (15), ledit tuyau principal (15) comprenant deux conduits: un conduit d'entrée (15a) depuis le tuyau principal (15) jusqu'à l'entrée du tube cylindrique (1) où se trouve le groupe turbogénérateur, et un conduit de sortie (15b) depuis ledit tube cylindrique (1) où se trouve le groupe turbogénérateur jusqu'au tuyau principal (15).
